**Europäisches Patentamt**

**European Patent Office**

**Office européen des brevets**

(19)

(11) Veröffentlichungsnummer: **0 152 719**
**B1**

(12) # EUROPÄISCHE PATENTSCHRIFT

(45) Veröffentlichungstag der Patentschrift:
**12.08.87**

(51) Int. Cl.⁴: **H 02 P 7/62**, H 02 P 9/12

(21) Anmeldenummer: **84730138.9**

(22) Anmeldetag: **10.12.84**

(54) Elektrische Synchronmaschine, die über rotierende Gleichrichter erregt wird.

(30) Priorität: **17.02.84 DE 3406274**

(43) Veröffentlichungstag der Anmeldung:
**28.08.85 Patentblatt 85/35**

(45) Bekanntmachung des Hinweises auf die Patenterteilung:
**12.08.87 Patentblatt 87/33**

(84) Benannte Vertragsstaaten:
**CH DE FR GB LI SE**

(56) Entgegenhaltungen:
**FR-A-1 425 921**
**GB-A-983 273**
**GB-A-1 321 608**
**US-A-3 303 410**

**IEE CONFERENCE ON POWER THYRISTORS AND THEIR APPLICATIONS, Nr. 53, 6.-8. Mai 1969, Seiten 84-85, London, GB; J.F. TONG: "Brushless synchronous motors using power thyristors"**

(73) Patentinhaber: **Siemens Aktiengesellschaft Berlin und München, Wittelsbacherplatz 2, D-8000 München 2 (DE)**

(72) Erfinder: **Nüssel, Lothar, Dipl.- Ing., Curtiusstrasse 61, D-1000 Berlin 45 (DE)**
Erfinder: **Radmer, Alfred, Ing. grad., Gartenfelder Strasse 50, D-1000 Berlin 20 (DE)**

## Beschreibung

Die Erfindung betrifft eine elektrische Synchronmaschine, die über rotierende Gleichrichter von der rotierenden, in Stern geschalteten Dreiphasenwicklung einer Erregermaschine erregt wird, wozu die Ausgänge der Dreiphasenwicklung zu den Dioden eines in Stern geschalteten Gleichrichters führen, dessen Sternpunkt mit einem Ende der Erregerwicklung verbunden ist, während das andere Ende der Erregerwicklung am Mittelpunkt der Dreiphasenwicklung liegt, bei der Hilfsschleifringe auf der Welle vorgesehen sind, von denen einer mit dem Mittelpunkt der Dreiphasenwicklung verbunden ist und die über abhebbare Bürsten und Schalter mit stationär angeordneten elektrischen Elementen verbindbar sind.

Eine derartige Erregung einer Synchronmaschine über rotierende Gleichrichter mit Mittelpunktsschaltung der Erregerwicklung ist aus der US-A- 33 03 410 bekannt. Bei der bekannten Synchronmaschine handelt es sich um einen Synchrongenerator, dessen rotierende Erregerschaltung während des asynchronen Hochlaufs der Synchronmaschine nicht in Betrieb ist. Obwohl die Erregung des Synchrongenerators über den rotierenden Gleichrichter schleifringlos ausgebildet ist, sind bei der bekannten Synchronmaschine noch auf der Welle zwei Hilfsschleifringe vorgesehen, die über abhebbare Bürsten und Schalter eine Verbindung mit sstationär angeordneten elektrischen Elementen erlauben. Es handelt sich hierbei um eine Vorrichtung zur Erkennung von Erdschlüssen im Läufer, die nur jeweils vor übergehend eingeschaltet wird und somit den ansonsten schleifringfreien Betrieb des Synchrongenerators nicht beeinflußt.

Während bei schleifringlos erregten Synchrongeneratoren die Erregerschaltung nicht während des asynchronen Hochlaufs der Maschine wirksam ist, bildet dieser für schleifringlos erregte Synchronmotoren einen normalen Betriebsfall. Dazu ist es z. B. aus der DE-C-15 63 323 und DE-A-32 18 033 bekannt, den Synchronmotor mit Hilfe einer Außenpolsynchronerregermaschine schleifringlos zu erregen, indem die rotierende Dreiphasenwicklung der Außenpolsynchronerregermaschine über einen rotierenden, in Drehstrombrückenschaltung geschalteten Gleichrichter die Erregerwicklung des Synchronmotors speist. Dazu ist der Erregerwicklung eine Reihenschaltung von zwei in Durchlaßrichtung des Erregerstromes gepolten Thyristoren parallel geschaltet, deren Verbindungsleitung mit einem Anschluß der Dreiphasenwicklung verbunden ist. Außerdem ist zwischen dem Pluspol der Erregerwicklung und den Steuerelektroden der Thyristoren eine spannungsabhängig zündende Zündeinrichtung geschaltet, damit die negativen Halbwellen des Erregerwechselstromes über die Thyristoren fließen, so daß der Erregerkreis vor Überspannungen geschützt ist. Diese Zündeinrichtungen sind jeweils bis zum Intrittfallen des Synchronmotors wirksam.

Weiterhin ist es bekannt, daß mehrere Umformersätze, bestehend jeweils aus einem von einem Synchronmotor angetriebenen Synchrongenerator nur dann parallel arbeiten können, wenn alle Antriebsmotoren in der gleichen Polradstellung betrieben werden, da anderenfalls die parallel zu schaltenden Synchrongeneratoren nicht synchronisiert werden können. Daher muß für solche Synchron-Synchron-Umformer, deren Antriebsmotoren wegen des beim unbelasteten asynchronen Hochlaufs fehlenden Gegenmomentes stets unerregt und im allgemeinen mit nicht richtiger Pollage zueinander die synchrone Drehzahl erreichen, die Möglichkeit gegeben sein, die Polradstellung nachträglich durch gezieltes Schlüpfenlassen des Antriebsmotors zu korrigieren. Der Erfindung liegt die Aufgabe zugrunde, eine betriebsmäßig schleifringlose Erregeranordnung eines Synchronmotors zu verwirklichen, die ein wiederholtes Umkehren des Erregerstromes und somit eine Einstellung der Polradstellung ermöglicht.

Zur Lösung dieser Aufgabe ist eine elektrische Synchronmaschine der eingangs beschriebenen Art gemäß der Erfindung so ausgebildet, daß die Ausgänge der Dreiphasenwicklung mit zwei Gleichrichtern unterschiedlicher Stromrichtung verbunden sind, daß zwischen deren Sternpunkt und dem einen Ende der Erregerwicklung je ein Thyristor liegt, zu deren Steuerelektroden eine parallel liegende, spannungsabhängig zündende Zündeinrichtung führt, daß je ein Hilfsschleifring mit den Enden der Erregerwicklungen je ein Hilfsschleifring mit den Sternpunkten der Gleichrichter und je ein Hilfsschleifring mit den Steuerelektroden der Thyristoren verbunden sind, daß die stationär angeordneten Elementen eine Gleichstromquelle enthalten, die zwischen die Steuerelektrode und die Kathode jedes der Thyristoren in Durchlaßrichtung schaltbar ist, sowie einen Kondensator, der parallel zu jedem Thyristor schaltbar ist, und einen Entregungswiderstand, der über antiparallele Dioden jeweils parallel zur Erregerwicklung schaltbar ist.

Nach dem normalen asynchronen Hochlauf der Synchronmaschine läßt sich durch diesen besonderen Aufbau des Erregerkreises nach der Erregung der Erregermaschine ein Thyristor durch einen von außen über die Hilfsschleifringe zugeleiteten Stromimpuls zünden, so daß die Synchronmaschine erregt ist. Hat sie dabei nicht die gewünschte Polradstellung eingenommen, so kann man sie durch Umkehrung des Erregerstromes zum Schlüpfen veranlassen. Dazu wird zunächst die Erregermaschine entregt, und man läßt den durch den gezündeten Thyristor fließenden Strom auf den durch die Remanenz vorgegebenen Minimalwert abklingen. Danach wird über andere Hilfsschleifringe und Bürsten der aufgeladene Kondensator parallel zum Thyristor geschaltet, so daß dieser gelöscht wird. Da dabei in der Erregerwicklung infolge ihrer Induktivität eine gewisse Energie verbleibt, wird diese anschließend durch Parallelschaltung des Entregungswiderstandes zur Erregerwicklung abgebaut. Danach kann der andere Thyristor wiederum durch einen Stromimpuls von außen in umgekehrter Richtung gezündet werden, so daß jetzt der Erregerstrom in umgekehrter Richtung durch die Erregerwicklung der Synchronmaschine fließt. Dadurch wurde die Synchronmaschine zum Schlüpfen veranlaßt und hat eine andere Polradstellung eingenommen. Dieser Vorgang kann beliebig oft wiederholt werden, bis die gewünschte Polradstellung erreicht ist.

Die Erregerschaltung gemäß der Erfindung hat noch weiterhin den Vorteil, daß die Synchronmaschine, wenn sie als Blindleistungsmaschine eingesetzt wird, sowohl mit positivem Erregerstrom für die Abgabe induktiver Blindleistung als auch mit negativem Erregerstrom für die Lieferung kapazitiver Blindleistung verwendet werden kann, wobei die Größe der abzugebenden kapazitiven Blindleistung bis kurz unterhalb der statischen Stabilitätsgrenze der Synchronmaschine gewählt werden kann.

Es ist zweckmäßig, bei den stationären Elementen der Erregerschaltung eine Ladeeinrichtung für den Kondensator vorzusehen, die mit diesen über einen Schalter verbindbar ist. Dadurch kann der Kondensator nach den jeweiligen Löschvorgängen wieder auf hohe Spannung aufgeladen werden.

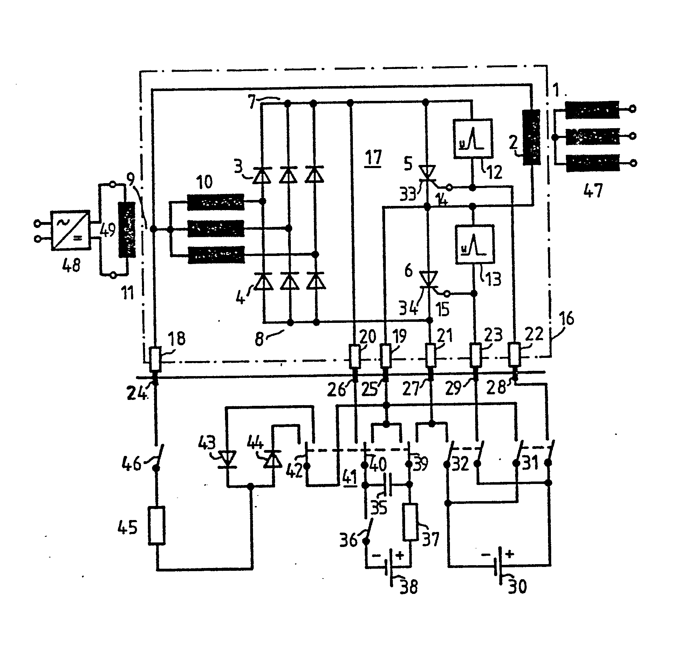

Im folgenden sei die Erfindung noch anhand des in der Zeichnung als Schaltbild dargestellten Ausführungsbeispiels näher erläutert.

Der Synchronmotor 1 ist als Antriebsmotor eines nicht dargestellten Synchrongenerators Teil eines Synchron-Synchron-Umformers. Seine Erregerwicklung 2 wird über zwei rotierende Gleichrichter 3, 4 unterschiedlicher Stromrichtung, die jeweils in Stern geschaltet sind, und zwei Thyristoren 5, 6 gespeist, die gleichsinnig in Reihe liegen und mit den Sternpunkten 7 des Gleichrichters 3 bzw. 8 des Gleichrichters 4 verbunden sind. Dazu ist das eine Ende der Erregerwicklung 2 mit zu der Verbindung zwischen den Thyristoren 5 und 6 geführt. Das andere Ende der Erregerwicklung 2 liegt am Mittelpunkt 9 der in Stern geschalteten Dreiphasenwicklung 10 der Außenpolerregermaschine 11. Die Ausgänge der Dreiphasenwicklung 10 sind entsprechend mit den Gleichrichtern 3 und 4 verbunden.

Für die Thyristoren 5 und 6 sind außerdem spannungsabhängig zündende Zündeinrichtungen 12 bzw. 13 vorgesehen. Die Zündeinrichtung 12 liegt parallel zum Thyristor 5 und ist zu seiner Steuerelektrode 14 geführt, während die Zündeinrichtung 13 parallel zum Thyristor 6 liegt und zur Steuerelektrode 15 geführt ist.

Der strichpunktiert eingefaßte rotierende Teil 16 der Erregereinrichtung 17 enthält weiterhin sechs Hilfsschleifringe 18 - 23, die auf der nicht dargestellten Welle des rotierenden Teils 16 angeordnet sind. Von diesen ist je ein Hilfsschleifring, nämlich die Hilfsschleifringe 18 und 19, mit den Enden der Erregerwicklung 2 verbunden, die Hilfsschleifringe 20 und 21 mit den Sternpunkten 7, 8 der Gleichrichter 3 und 4, und die Hilfsschleifringe 22 und 23 sind mit den Steuerelektroden 14, 15 der Thyristoren 5 und 6 verbunden. Zu den Hilfsschleifringen 18 - 23 gehören abhebbare Bürsten 24 - 29, derart, daß die Bürste 24 dem Hilfsschleifring 18, die Bürste 25 dem Hilfsschleifring 19, die Bürste 26 dem Hilfsschleifring 20, die Bürste 27 dem Hilfsschleifring 21, die Bürste 28 dem Hilfsschleifring 22 und die Bürste 29 dem Hilfsschleifring 23 zugeordnet ist. Diese abhebbaren Bürsten 24 - 29 führen zu stationär angeordneten elektrischen Elementen, die jeweils zum Zünden der Thyristoren 5 und 6, zu ihrer Löschung und zur Entregung der Erregerwicklung 2 dienen.

So ist eine Gleichstromquelle 30 vorgesehen, deren Ausgänge mit den zweipoligen Schaltern 31, 32 verbunden sind. Der Pluspol dieser Gleichstromquelle 30 ist über den Schalter 31 mit der Bürste 28, dem Hilfsschleifring 22 und der Steuerelektrode 14 des Thyristors 5 verbindbar, während er über den Schalter 32, die Bürste 29 und dem Hilfsschleifring 23 zur Steuerelektrode 15 des Thyristors 6 verbunden wird. Entsprechend erfolgt die Verbindung des Minuspols der Gleichstromquelle 30 über den Schalter 31 mit der Bürste 25 und dem Hilfsschleifring 19 zur Kathode 33 des Thyristors 5 und über den Schalter 32, der Bürste 27, dem Hilfsschleifring 21 zur Kathode 34 des Thyristors 6. Somit können durch entsprechendes Schließen der Schalter 31 bzw. 32 die Thyristoren 5 bzw. 6 wahlweise von außen her gezündet werden.

Weiterhin gehört zu den stationären Elementen der Kondensator 35, der über den Schalter 36 und den Ladewiderstand 37 mit einer Gleichstromquelle 38 verbindbar ist und von dieser auf hohe Spannung aufgeladen werden kann. Außerdem ist der Kondensator 35 mit zwei beweglichen Schaltelementen 39, 40 eines dreipoligen Schalters 41 verbunden, der jeweils zwei unterschiedliche Schaltstellungen einnehmen kann. Liegt der Schalter 41 in seiner rechten Schaltstellung, so ist der Kondensator 35 über das Schaltelement 39, die Bürste 27, den Hilfsschleifring 21 mit der Kathode 34 des Thyristors 6 verbunden und entsprechend über das Schaltelement 40 die Bürste 25, den Hilfsschleifring 19 mit seiner Anode, so daß der Kondensator 35 dem Thyristor 6 parallel geschaltet ist und diesen löscht. Entsprechend wird in der linken Schaltstellung des Schalters 41 eine Parallelschaltung des Kondensators 35 zum Thyristor 5 und dessen Löschung erzielt.

Das dritte bewegliche Schaltstück 42 stellt in seiner rechten Schaltstellung eine Verbindung zur Diode 43 bzw. in seiner linken Schaltstellung eine Verbindung zur Diode 44 her. Beide Dioden 43, 44 sind antiparallel geschaltet und führen zu einem Entregungswiderstand 45, dessen eines Ende somit über die Dioden 43 bzw. 44, das bewegliche Schaltelement 42 des Schalters 41 mit der abhebbaren Bürste 25 und dem Hilfsschleifring 19 mit dem einen Ende der Erregerwicklung 2 verbindbar ist. Das andere Ende des Entregungswiderstandes 45 ist über einen Schalter 46 an die abhebbare Bürste 24 anschließbar und somit über den Hilfsschleifring 18 zum Mittelpunkt 9 und zum anderen Ende der Erregerwicklung 2 verbindbar. Der Entregungswiderstand liegt dann parallel zur Erregerwicklung 2 und kann die in ihr nach dem Löschen der Thyristoren 5 bzw. 6 verbleibende induktive Energie abbauen.

Die Erregereinrichtung 17 des Synchronmotors 1 wirkt folgendermaßen:

Der Synchronmotor 1 wird zunächst durch Speisung seiner Dreiphasenwicklung 47 bei unerregter Erregermaschine 11 asynchron hochgefahren. Dabei werden die Thyristoren 5, 6 spannungsabhängig durch ihre Zündvorrichtungen 12, 13 gezündet und geben den Strompfad für die jeweiligen Halbwellen des beim Hochlauf in der Erregerwicklung 2 induzierten schlupffrequenten Anlaufwechselstromes frei. Wenn der Hochlauf beendet ist, kann die Erregermaschine 11 erregt werden. Dazu dient eine Hilfserregereinrichtung 48, welche die Erregerwicklung 49 der Erregermaschine 11 mit Gleichstrom speist. Zum Erregen des Synchronmotors 1 wird nun der Thyristor 5 durch einen Stromimpuls aus der Gleichstromquelle 30 gezündet. Dazu wird der Schalter 31 geschlossen, so daß die Gleichstromquelle 30 über die Bürste 25, den Hilfsschleifring 19 mit der Kathode 33 des Thyristors 5 und über die Bürste 28, den Hilfsschleifring 22 an die Steuerelektrode 14 des Thyristors 5 gelegt ist und den Thyristor 5 zündet. Der Synchronmotor 1 synchronisiert dadurch und nimmt eine bestimmte Polradstellung ein.

Wenn diese Polradstellung nicht mit der gewünschten übereinstimmt, so muß der Synchronmotor 1 zum Schlüpfen gebracht und von neuem mit umgekehrter Richtung des Erregerstromes erregt werden. Hierzu wird zunächst die Erregermaschine 11 entregt und man läßt den Strom durch den Thyristor 5 auf seinen durch die Remanenz vorgegebenen möglichen Minimalwert abklingen. Danach wird der Thyristor 5 von außen her über den Hilfsschleifring 20 und die abhebbare Bürste 26 sowie den Hilfsschleifring 19 und die Bürste 25 und den in die linke Schaltstellung gebrachten dreipoligen Schalter 41 mit dem Kondensator 35 verbunden. Der Kondensator 35, der zuvor auf hohe Spannung aufgeladen war, löscht den Thyristor 5. Durch die linke Schaltstellung des Schalters 41 ist weiterhin über das bewegliche Schaltelement 42 der Hilfsschleifring 19 und die Bürste 25 über die Diode 44 mit dem Entregungswiderstand 45 verbunden. Da zuvor der Schalter 46 geschlossen wurde, liegt der Entregungswiderstand 45 noch über die Bürste 24 und den Hilfsschleifring 18 parallel zur Erregerwicklung 2 und baut die darin aufgrund der Erregerinduktivität verbliebene Energie ab. Danach wird der Schalter 46 wieder geöffnet und der dreipolige Schalter 41 in seine neutrale Stellung gebracht. Die Erregermaschine 11 kann dann von neuem erregt werden, und der Thyristor wird jetzt durch Schließen des Schalters 32 mit Hilfe der Gleichstromquelle 30 gezündet, so daß der Erregerstrom in der Erregerwicklung 2 des Synchronmotors 1 nun in entgegengesetzter Richtung fließt. Dadurch wird ein Schlüpfen des Synchronmotors 1 verursacht, der jetzt eine andere Polradstellung einnimmt, wenn er in Tritt gezogen wird.

Ist diese neue Polradstellung des Synchronmotors 1 die gewünschte, so wird er schleifringlos über die rotierenden Gleichrichter 3 bzw. 4 erregt, da sämtliche Bürsten 24 bis 28 wieder abgehoben sind. Ist auch diese neue Polradstellung nicht die gewünschte, so muß eine erneute Umkehrung des Erregerstromes vorgenommen werden. Inzwischen wird auch der Kondensator 35 durch Schließen des Schalters 36 neu auf Spannung aufgeladen.

## Patentansprüche

1. Elektrische Synchronmaschine, die über rotierende Gleichrichter (3, 4) von der rotierenden, in Stern geschalteten Dreiphasenwicklung (10) einer Erregermaschine (11) erregt wird, wozu die Ausgänge der Dreiphasenwicklung zu den Dioden (3, 4) eines in Stern geschalteten Gleichrichters führen, dessen Sternpunkt (7, 8) mit einem Ende der Erregerwicklung (2) verbunden ist, während das andere Ende der Erregerwicklung am Mittelpunkt (9) der Dreiphasenwicklung liegt, bei der Hilfsschleifringe (18 - 23) auf der Welle vorgesehen sind, von denen einer (18) mit dem Mittelpunkt der Dreiphasenwicklung verbunden ist, und die über abhebbare Bürsten (24 - 29) und Schalter (31, 32, 39, 40, 42, 46) mit stationär angeordneten elektrischen Elementen (30, 35, 37, 38, 43 - 45) verbindbar sind, dadurch gekennzeichnet, daß die Ausgänge der Dreiphasenwicklung (10) mit zwei Gleichrichtern (3, 4) unterschiedlicher Stromrichtung verbunden sind,
daß zwischen deren Sternpunkt (7, 8) und dem einen Ende der Erregerwicklung (2) je ein Thyristor (5, 6) liegt, zu deren Steuerelektroden (14, 15) eine parallel liegende, spannungsabhängig zündende Zündeinrichtung (12, 13) führt, daß je ein Hilfsschleifring (18, 19) mit den Enden der Erregerwicklung (2), je ein Hilfsschleifring (20, 21) mit den Sternpunkten (7, 8) der Gleichrichter (3, 4) und je ein Hilfsschleifring (22, 23) mit den Steuerelektroden (14, 15) der Thyristoren (5, 6) verbunden ist,

daß die stationär angeordneten Elemente eine Gleichstromquelle (30) enthalten, die zwischen die Steuerelektrode (14, 15) und die Kathode (33, 34) jedes der Thyristoren (5, 6) in Durchlaßrichtung schaltbar ist, sowie einen Kondensator (35), der parallel zu jedem Thyristor (5, 6) schaltbar ist,

und einen Entregungswiderstand (45), der über antiparallele Dioden (43, 44) jeweils parallel zur Erregerwicklung (2) schaltbar ist.

2. Elektrische Synchronmaschine nach Anspruch 1,

dadurch gekennzeichnet, daß der Kondensator (35) über einen Schalter (36) mit einer Ladeeinrichtung (37, 38) verbindbar ist.


## Claims

1. An electric synchronous machine energised via rotating rectifiers (3,4) by the rotating, three-phase, star-connected winding (10) of an energising machine (11), for which purpose the outputs of the three-phase winding lead to the diodes (3, 4) of a star-connected rectifier, the star point (7, 8) of which is connected to one end of the energising winding (2), whilst the other end of the energising winding is connected to the centre point (9) of the three-phase winding, auxiliary slip rings (18-23) being arranged on the shaft, of which one (18) is connected to the centre point of the three-phase winding, and can be connected via removable brushes (24-29) and switches (31, 32, 39, 40, 42, 46) to stationary, electrical elements (30, 35, 37, 38, 43-45), characterised in that the outputs of the three-phase winding (10) are connected to two rectifiers (3, 4) of opposing current directions;

that a thyristor (5, 6) is located between the respecrive star points (7, 8) of said rectifiers and one end of the energising winding (2), a parallel ignition device (12, 13) leading to the control electrodes (14, 15) of said thyristors to ignite in dependence upon voltage;

that an auxiliary slip ring (18, 19) is in each case connected to the ends of the energising winding (2), an auxiliary slip ring (20, 21) is in each case connected to the star points (7, 8) of the rectifiers (3, 4), and an auxiliary slip ring (22, 23) is in each case connected to the control electrodes (14, 15) of the thyristors (5, 6);

that the stationary elements contain a d.c. source (30) to be connected between he control electrode (14, 15) and the cathode (33, 34) of each of the thyristors (5, 6) in the forwards direction, together with a capacitor (35) to be connected parallel to each thyristor (5, 6);

and a de-energising resistor (45) to be connected via anti-parallel diodes (43, 44) in each case parallel to the energising winding (2).

2. An electric synchronous machine as claimed in Claim 1, characrerised in that the capacitor (35) can be connected to a charging device (37, 38) via a switch (36).


## Revendications

1. Machine électrique synchrone, qui est excitée, par l'intermédiaire de redresseurs tournants (3, 4), par l'enroulement triphasé (10), en montage en étoile, d'une excitatrice (11), ce pourquoi les sorties de l'enroulement triphasé sont reliées aux diodes (3, 4) d'un redresseur en montage en étoile, dont le point neutre (7, 8) est relié à une première extrémité de l'enroulement d'excitation (2), alors que l'autre extrémité de l'enroulement d'excitation (2) est reliée au point médian (9) de l'enroulement triphasé, dans laquelle des bagues auxiliaires (18-23) sont prévues sur l'arbre, dont l'une (18) est reliée au point médian de l'enroulement triphasé, lesdites bagues auxiliaires étant susceptibles d'être reliées à des éléments électriques stationnaires (30, 35, 37, 38, 43, 45), par l'intermédiaire de balais détachables (24-29) et d'interrupteurs (31, 32, 39, 40, 42, 46), caractérisée par le fait

. que les sorties de l'enroulement triphasé (10) sont reliées à deux redresseurs (3, 4) à sens passants différents;

. qu'entre le point neutre (7, 8) de ces redresseurs et ladite première extrémité de l'enroulement d'excitation (2) sont prévus respectivement des thyristors (5, 6) dont les électrodes de commande (14, 15) sont shuntées par des dispositifs d'amorçage (12, 13) à amorçage en fonction de la tension;

. que les bagues auxiliaires (18, 19) sont respectivement reliées aux extrémités de l'enroulement d'excitation (2), que les bagues auxiliaires (20, 21) sont respectivement reliées aux points neutres (7, 8) des redresseurs (3, 4) et que les bagues auxiliaires (22, 23) sont respectivement reliées aux électrodes de commande (14, 15) des thyristors (5, 6);

. que les éléments stationnaires comportent une source de courant constante (30) qui est susceptible d'être mise en circuit entre l'électrode de commande (14, 15) et la cathode (33, 34) de chacun des thyristors (5, 6), dans le sens passant, ainsi qu'un condensateur (35) qui est susceptible d'être branché en parallèle sur chaque thyristor (5, 6), et

. qu'une résistance de désexcitation (45) est susceptible d'être branchée en parallèle sur l'enroulement d'excitation (2) par l'intermédiaire de diodes (43, 44) en montage anti-parallèle.

2. Machine électrique synchrone selon la revendication 1, caractérisée par le fait que le condensateur (35) est susceptible d'être relié, par l'intermédiaire d'un interrupteur (36), à un dispositif de charge (37, 38).